# FASCICULE DE BREVET EUROPEEN

(11) **EP 1 016 590 B1**
(45) Date de publication et mention de la délivrance du brevet: **03.03.2004**
(21) Numéro de dépôt: 99403278.7
(22) Date de dépôt: 24.12.1999
(51) Int. Cl.: B64C 25/20, B64C 25/10

(54) **Train d'atterrissage d'avion, équipé d'un dispositif de protection d'un réservoir de carburant voisin, et avion comportant un tel train**
Flugzeugfahrwerk mit einer Vorrichtung zum Schutz eines sich in der Nähe befindlichen Treibstofftanks und Flugzeug mit einem solchen Fahrwerk
Aircraft landing gear equipped with a protection device for a fuel tank in its vicinity and aircraft equipped with such landing gear

(30) Priorité: 29.12.1998 FR 9816542
(43) Date de publication de la demande: 05.07.2000
(73) Titulaire: AIRBUS France, 31060 Toulouse Cedex 03 (FR)
(72) Inventeur: Dazet, Francis, 31140 Saint-Alban (FR)
(74) Mandataire: Poulin, Gérard

(56) Documents cités:
- FR-A- 2 348 851
- GB-A- 2 320 002
- US-A- 4 155 522

## Description

### Domaine technique

L'invention concerne un train d'atterrissage d'avion, équipé d'un dispositif de protection d'un réservoir de carburant placé derrière le train.

L'invention concerne également un avion, notamment de type commercial, tel qu'un avion destiné au transport de passagers et/ou de fret, comportant un train d'atterrissage de ce type.

### Etat de la technique

Dans les avions commerciaux, les réservoirs de carburant se situent habituellement dans la voilure ainsi que dans la partie basse du tronçon de fuselage qui tient la voilure, devant le train d'atterrissage principal. Cette position centrale et symétrique des réservoirs par rapport au plan longitudinal médian de l'avion permet de gérer facilement le centrage de celui-ci. En d'autres termes, la position du centre de gravité de l'avion est peu modifiée par la diminution de la masse du carburant qui se produit au fur et à mesure que celui-ci est brûlé dans les moteurs.

Lorsqu'on désire augmenter la capacité et le rayon d'action d'un avion, on peut être amené à modifier celui-ci et à en concevoir une nouvelle version, sans toutefois modifier ses caractéristiques essentielles. En effet, cela permet d'utiliser en commun sur les différentes versions d'un même avion un nombre de pièces aussi élevé que possible.

Par conséquent, une nouvelle version d'un avion existant, caractérisée par une capacité et un rayon d'action accrus par rapport à la version de base, peut être définie sans que la voilure et le tronçon qui la maintient ne soient modifiés. Dans ces conditions, les réservoirs de carburant contenus dans la voilure et dans ce tronçon ne sont pas non plus modifiés, de sorte que leur capacité reste inchangée. Afin de permettre à l'avion de mener à bien sa nouvelle mission, qui implique de disposer d'une quantité supplémentaire de carburant afin d'accroître son rayon d'action, un réservoir de carburant supplémentaire doit alors être rajouté. Un emplacement privilégié pour implanter ce réservoir supplémentaire se situe dans la partie basse du fuselage, derrière le train d'atterrissage principal. En effet, cet emplacement situé dans l'axe de l'avion permet une bonne gestion du carburant tout en conservant à l'avion un centrage qui se fait tout seul, c'est-à-dire sans action mécanique, hydraulique ou autre.

Cette position du réservoir de carburant supplémentaire peut toutefois se révéler critique lors de conditions d'atterrissage particulières. En effet, lors de l'atterrissage de l'avion, les frottements induits par l'action des freins sur les roues amènent le dispositif de freinage à de très hautes températures (jusqu'à 1200°C). Or, dans le cas d'un mauvais atterrissage, le train d'atterrissage principal peut se rabattre vers l'arrière, par exemple en raison de la présence d'un obstacle sur la piste ou en raison de la cassure de certaines pièces structurales. Il existe alors un risque important pour que le train d'atterrissage, et en particulier le système de freinage situé au niveau des roues, vienne percuter et percer la cloison qui sépare le train d'atterrissage du réservoir de carburant supplémentaire. Dans cette hypothèse, la mise en contact des éléments du dispositif de freinage, portés à très haute température, avec le carburant pourrait se traduire par l'explosion de celui-ci et, par conséquent, par la destruction complète et rapide de l'avion.

Dans la pratique, il n'est pas possible d'éliminer totalement le risque d'un atterrissage qui se passe mal. En revanche, l'explosion de l'avion consécutive au phénomène qui vient d'être expliqué est inacceptable.

Sur les avions, un risque comparable existe à proximité des réacteurs. En effet, derrière la chambre de combustion de chacun des réacteurs se trouve une turbine dont les aubes sont portées à de très hautes températures. En cas de rupture d'une aube, il est donc impératif que celle-ci ne rencontre jamais sur sa trajectoire des éléments vitaux à la conduite de l'avion, tels que des commandes de vols, des circuits hydrauliques, etc., ni du carburant. En ce qui concerne le carburant, la solution actuellement utilisée consiste à éliminer toute présence de combustible (circuit, pompe, réservoir, etc.) du cône d'éjection probable d'une aube.

Toutefois, cette solution n'est pas transposable dans le cas d'un réservoir de carburant placé derrière le train d'atterrissage principal de l'avion. En effet, pour les raisons énoncées précédemment, cette position présente des avantages essentiels qui imposent de la retenir, lorsqu'un réservoir supplémentaire doit être implanté sur l'avion.

On connaît aussi du document GB-A-2 320 002 un élément de train d'atterissage principale implanté sous la voilure d'un avion et doté d'un dispositif permettant un détachement contrôlé de l'élément de train, par exemple en cas de crash, sans risque d'intéraction avec un réservoir de carburant placé sous l'aile. Ce dispositif est matérialisé par des éléments de liaison supportant le palier avant par lequel l'amortisseur de train est articulé sur l'aile. Les éléments de liaison sont conçus pour se rompre lorsqu'ils sont soumis à un effort excessif vers le bas. Le train pivote alors autour de l'axe longitudinal d'une poutre reliant l'aile au fuselage, jusqu'au déboîtement souhaité.

### Exposé de l'invention

L'invention a principalement pour objet un train d'atterrissage prévu pour être placé devant un réservoir de carburant et dans lequel le train d'atterrissage est équipé de moyens de protection permettant de supprimer tout risque de collision entre les éléments du train d'atterrissage portés à très haute température et le carburant, dans des conditions d'atterrissage anormales, préservant ainsi l'intégrité de l'avion.

Conformément à l'invention, ce résultat est obtenu au moyen d'un train d'atterrissage d'avion, apte à être relié à une structure de l'avion par des moyens de montage localisés, dans lequel il est prévu, sur ledit train d'atterrissage, des moyens de protection d'un réservoir de carburant, pour déconnecter automatiquement, au moins en partie, les moyens de montage localisés, lors d'un basculement accidentel du train d'atterrissage vers l'arrière, caractérisé en ce que le réservoir de carburant est apte à être placé derrière le train d'atterrissage et les moyens de protection comprennent au moins une pièce de commande de déconnexion, montée de façon mobile sur une structure du train d'atterrissage et apte à venir engager une partie de la structure de l'avion, située entre le réservoir de carburant et le train d'atterrissage, lors d'un basculement accidentel de celui-ci vers l'arrière d'un angle minimal prédéterminé, inférieur à un angle maximal prédéterminé.

Ainsi, dans l'hypothèse d'un mauvais atterrissage se traduisant par un basculement du train d'atterrissage vers l'arrière, celui-ci est automatiquement déconnecté au moins partiellement de la structure de l'avion. Par conséquent, tout risque pour que les parties chaudes du train, et notamment le dispositif de freinage situé au niveau des roues, viennent en contact avec le carburant est supprimé. Une destruction complète de l'avion due à une explosion du carburant provoquée par sa venue en contact avec les parties chaudes du train est ainsi empêchée.

Un renforcement de la partie de la structure de l'avion sur laquelle prend appui la pièce de commande de déconnexion est avantageusement prévu, afin d'éviter tout risque de perforation de la paroi du réservoir du carburant.

Habituellement, les moyens de montage localisés par lesquels le train d'atterrissage est relié à la structure de l'avion comprennent au moins une broche liée à la structure du train d'atterrissage, normalement reçue dans un logement lié à la structure de l'avion. Dans ce cas, les moyens de protection comprennent de plus au moins un mécanisme apte. à déplacer la broche précitée parallèlement à elle-même, pour la dégager progressivement de son logement, en réponse à un déplacement de la pièce de commande de déconnexion par rapport à la structure du train d'atterrissage, consécutif à un pivotement de celui-ci entre ledit angle minimal prédéterminé et ledit angle maximal prédéterminé.

Afin d'éviter un fonctionnement intempestif des moyens de protection et de s'affranchir des mouvements parasites causés, par exemple, par le mauvais état de la piste d'atterrissage, le mécanisme inclut avantageusement un organe frangible immobilisant normalement la broche par rapport à la structure du train d'atterrissage, lorsque l'effort exercé sur cet organe frangible reste inférieur à un seuil prédéterminé.

Habituellement, les moyens de montage localisés comprennent deux broches alignées liées à la structure du train d'atterrissage et normalement reçues dans deux logements alignés liés à la structure de l'avion. Les moyens de protection peuvent alors comprendre un ou deux mécanismes aptes à déplacer soit l'une des deux broches, soit simultanément chacune des broches parallèlement à elle-même.

Par ailleurs, la pièce de commande de déconnexion peut notamment être montée pivotante sur la structure du train d'atterrissage, par exemple autour d'un axe parallèle à l'axe de la broche et orienté transversalement par rapport à l'avion.

Dans ce cas, le mécanisme comprend avantageusement un premier levier reliant la pièce de commande de déconnexion à une pièce de renvoi montée pivotante sur la structure du train d'atterrissage, et un deuxième levier reliant la pièce de renvoi à la broche.

L'invention concerne également un avion, comprenant au moins un train d'atterrissage tel que défini précédemment relié à une structure de l'avion par des moyens de montage localisés, et au moins un réservoir de carburant, dans lequel le réservoir de carburant est placé derrière le train d'atterrissage et en ce que des moyens de protection dudit réservoir sont prévus, sur le train d'atterrissage, pour déconnecter automatiquement, au moins en partie, les moyens de montage localisés, lors d'un basculement accidentel du train d'atterrissage vers l'arrière, au-delà d'un angle maximal prédéterminé.

Dans une application privilégiée de l'invention, le réservoir de carburant est un réservoir additionnel placé dans la partie basse du fuselage et le train d'atterrissage constitue le train d'atterrissage principal de l'avion.

### Brève description des dessins

On décrira à présent, à titre d'exemple non limitatif, un mode de réalisation préféré de l'invention, en se référant aux dessins annexés, dans lesquels:
- la figure 1 est une vue de côté qui représente schématiquement un avion conforme à l'invention ;
- la figure 2 est une vue en perspective qui représente le train d'atterrissage principal de l'avion de la figure 1, observé de l'arrière, incorporant des moyens de protection conformes à l'invention ;
- la figure 3 est une vue de côté montrant schématiquement l'implantation des moyens de protection dans le haut du train d'atterrissage de la figure 2, ainsi que la partie attenante de la structure de l'avion située immédiatement derrière le train ;
- la figure 4 représente la partie haute du train d'atterrissage des figures 2 et 3, observée selon la flèche F de la figure 3, les moyens de protection étant représentés respectivement dans leur position normale inactive sur la moitié droite et dans leur position active d'atterrissage accidentel sur la moitié gauche ; et
- la figure 5 représente schématiquement en A, B et C le train d'atterrissage portant les moyens de protection, respectivement dans son état normal inactif, après un premier pivotement vers l'arrière susceptible de commander un début d'actionnement des moyens de protection et après un pivotement plus important vers l'arrière propre à assurer la déconnexion du train d'atterrissage.

### Description détaillée d'un mode de réalisation préféré de l'invention

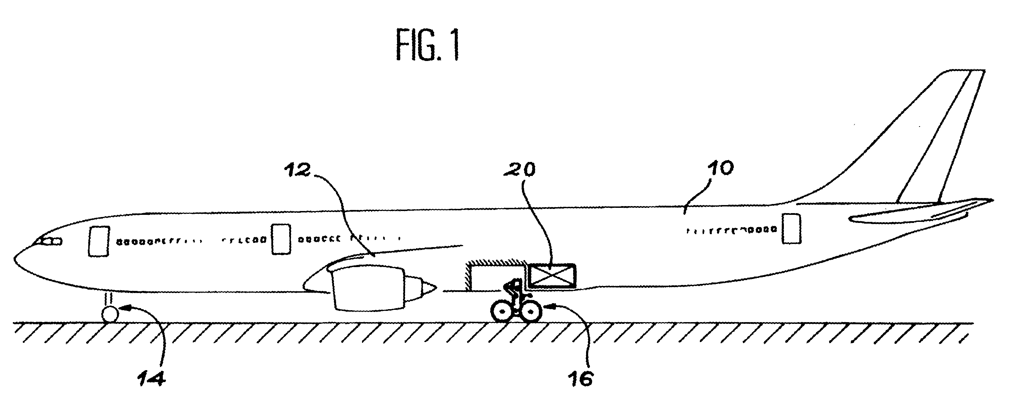

La figure 1 représente schématiquement un avion conforme à l'invention. Cet avion est un avion commercial, de conception générale classique, destiné au transport de passagers et/ou de fret. Seules les caractéristiques nécessaires à une bonne compréhension de l'invention seront décrites ci-après.

La structure de l'avion comprend notamment, de façon habituelle, un fuselage 10 ainsi qu'une voilure 12. Lorsque l'avion n'est pas en vol, cette structure est apte à reposer sur le sol par un train d'atterrissage auxiliaire avant 14 et un train d'atterrissage principal central 16. Ce dernier comprend généralement au moins deux éléments de train implantés sous le fuselage 10, auxquels peuvent éventuellement s'ajouter des éléments de train implantés sous la voilure 12. Pour simplifier, l'expression "train d'atterrissage" est utilisée dans l'ensemble du texte pour désigner chaque élément de train.

De manière également habituelle, l'avion est équipé de réservoirs de carburant (non représentés) implantés dans la voilure 12 ainsi que dans la partie basse du tronçon de fuselage 10 supportant celle-ci. Ce tronçon est placé à l'avant du train d'atterrissage principal 16 implanté sous le fuselage.

Conformément à l'invention, un réservoir supplémentaire 20 est également implanté dans la partie basse du fuselage 10, dans un tronçon de celui-ci situé immédiatement derrière le train d'atterrissage principal 16.

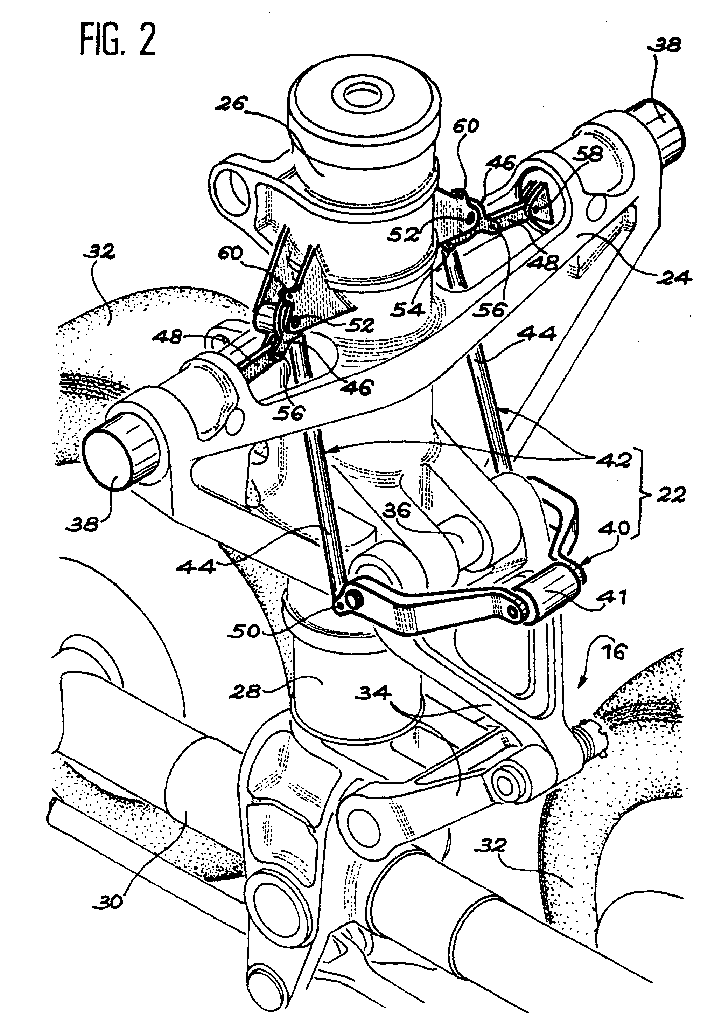

Conformément à l'invention, le train d'atterrissage principal 16 est équipé de moyens de protection 22, représentés en trait gras sur la figure 2. Ces moyens de protection 22 ont pour fonction de déconnecter automatiquement, au moins en partie, des moyens de montage localisés par lesquels le train d'atterrissage 16 est relié au fuselage 10, lorsque ledit train bascule accidentellement vers l'arrière au-delà d'un angle maximal prédéterminé.

Un mode de réalisation préféré de ces moyens de protection 22 et de leur implantation sur le train d'atterrissage 16 va à présent être décrit en détail en se référant aux figures 2 à 5. La description est faite dans l'état sorti du train.

Comme l'illustre notamment la figure 2, la structure du train principal 16 comporte un châssis 24, réalisé d'un seul tenant avec un fût vertical 26 dans lequel est logé un amortisseur principal. La partie basse mobile 28 de cet amortisseur porte, à son extrémité inférieure, un boggie 30 dont chacune des extrémités avant et arrière supporte à son tour la fusée d'une paire de roues 32, montées en diabolo. Un système d'embiellage 34, interposé entre le fût 26 et le boggie 30, assure la rétraction de l'amortisseur lors du relevage du train d'atterrissage 16. Ce système d'embiellage 34 est articulé dans le bas du fût 26 par un axe 36 parallèle aux axes des roues 32 et orthogonal à l'axe du fût 26. Par rapport à l'avion, l'axe 36 est orienté transversalement.

Le mécanisme assurant la commande de sortie et de rentrée du train d'atterrissage 16 a été volontairement omis sur la figure 2, afin d'en faciliter la lecture.

La structure du train d'atterrissage 16 illustré sur la figure 2 est reliée à la structure de l'avion, et plus précisément dans ce cas au fuselage 10, par des moyens de montage localisés, interposés notamment entre le châssis 24 et la structure du fuselage 10. Ces moyens de montage localisés comprennent dans ce cas deux broches cylindriques alignées 38, qui font normalement saillie de part et d'autre du châssis 24, parallèlement à l'axe 36 et à l'axe des roues 32 et orthogonal à l'axe du fût 26. Ces broches 38 sont normalement reçues dans des logements cylindriques complémentaires (non représentés) prévus à cet effet dans la structure du fuselage 10.

Les moyens de montage localisés incluant les deux broches 38 et leurs logements complémentaires permettent au train d'atterrissage 16 de pivoter entre son état sorti illustré sur la figure 2, et son état rentré, dans lequel le train est escamoté dans une case de train prévue à cet effet sous le fuselage 10 de l'avion.

Dans le mode de réalisation préféré de l'invention illustré sur les figures 2 à 5, les moyens de protection 22 comprennent une pièce 40 de commande de déconnexion, supportée de façon mobile par le fût 26, ainsi qu'une paire de mécanismes 42 reliant cette pièce 40 à chacune des broches 38. Ces pièces sont agencées afin de déplacer les broches 38 parallèlement à leur axe commun, pour déconnecter progressivement au moins en partie le train d'atterrissage 16 de la structure du fuselage 10, lorsqu'un atterrissage induit un risque pour que les parties chaudes du train viennent au contact du carburant contenu dans le réservoir 20.

Dans le mode de réalisation illustré sur les figures, la pièce 40 de commande de déconnexion est une pièce sensiblement en forme de U. Cette pièce 40 est montée pivotante, par ses extrémités, sur le fût 26, autour de l'axe 36 par lequel le système d'embiellage 34 est lui-même articulé sur le fût. La pièce 40 porte un galet 41 dans sa partie centrale.

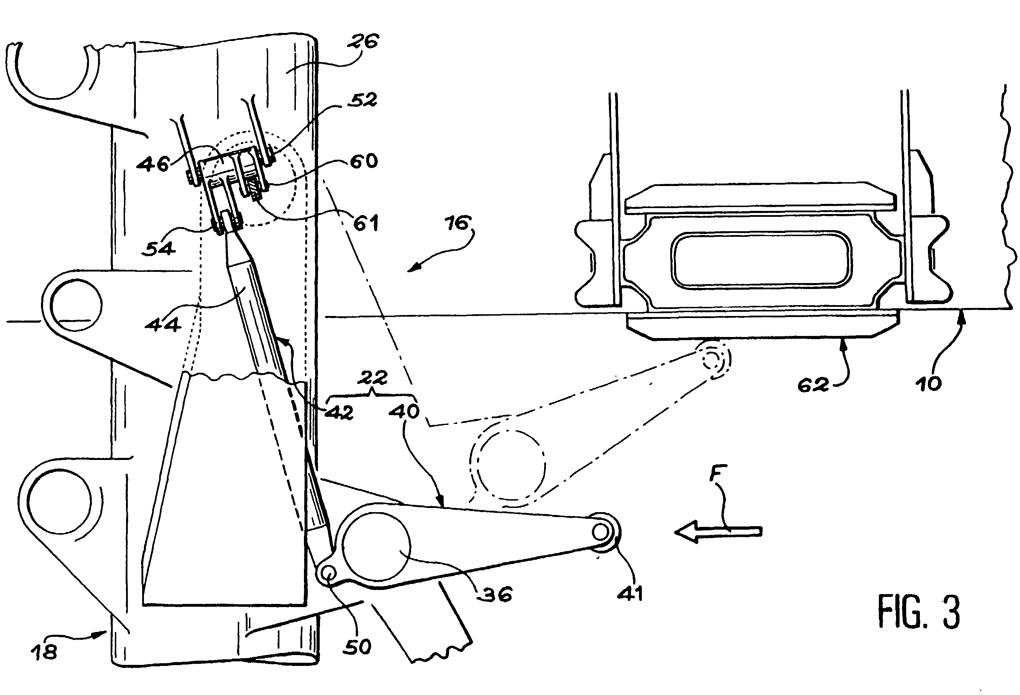

Comme l'illustrent notamment les figures 2 et 3, lorsque le train d'atterrissage 16 est sorti et que le fût 26 est orienté sensiblement verticalement, la pièce 40 de commande de déconnexion fait saillie vers l'arrière, selon une direction sensiblement horizontale, à partir de l'axe 36. Elle est alors située au-dessus du système d'embiellage 34 et dispose d'un angle de débattement vers le bas suffisant pour commander l'escamotage complet des broches 38 à l'intérieur du châssis 24, par l'intermédiaire des mécanismes 42. Cet agencement, permet la déconnexion du train d'atterrissage 16 dans les conditions d'atterrissage accidentel impliquant un risque de perforation de la paroi du réservoir 20 par le train.

La pièce 40 de commande de déconnexion agit sur chacune des broches 38 par un mécanisme 42 identique, disposé symétriquement par rapport à un plan vertical médian du train d'atterrissage 16. La description qui va suivre s'applique donc à chacun de ces mécanismes 42.

Chaque mécanisme 42 comprend un premier levier ou biellette 44, qui relie la pièce 40 de commande de déconnexion à une pièce de renvoi 46, montée pivotante sur le fût 26. Le mécanisme 42 comprend aussi un deuxième levier ou biellette 48, qui relie la pièce de renvoi 46 à la broche 38 située du côté de ce mécanisme.

De façon plus précise, le premier levier 44 est orienté selon une direction presque verticale et son extrémité inférieure est reliée à une extrémité attenante de la pièce 40 par un axe de pivotement 50 situé légèrement en avant par rapport à l'axe 36 d'articulation de la pièce 40 sur le fût 26, et sensiblement parallèle à cet axe.

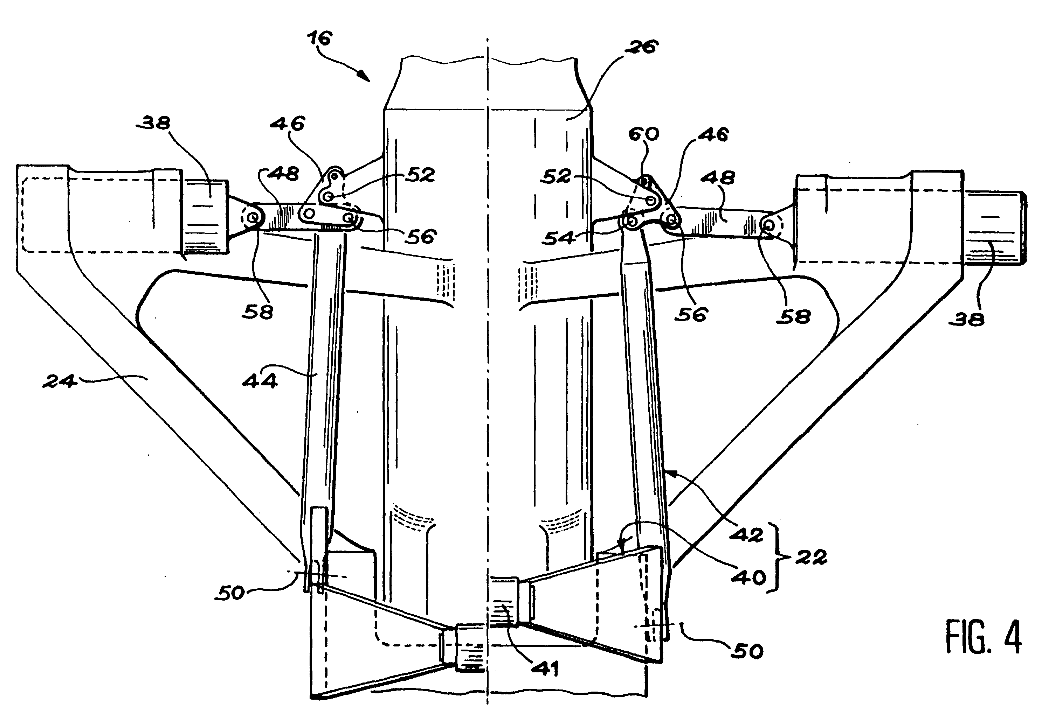

Par ailleurs, la pièce de renvoi 46 est supportée de façon tournante, dans le haut du fût 26, par un axe 52 orthogonal aux axes du fût 26 et des broches 38 et situé à un niveau légèrement supérieur à celui de l'axe des broches. L'extrémité haute du premier levier 44 est articulée sur la pièce de renvoi 46 par un axe 54, initialement décalé vers le fût 26 par rapport à l'axe 52 (voir la partie droite de la figure 4).

Le deuxième levier 48 est agencé approximativement dans l'axe de la broche 38. L'une de ses extrémités est articulée sur la pièce de renvoi 46 par un axe 56, initialement placé du côté de la broche 38 par rapport à l'axe 52. L'autre extrémité du deuxième levier 48 est articulée à l'extrémité de la broche 38 tournée vers le fût 26, par un axe 58. Les axes 54, 56 et 58 sont parallèles aux axes 52 par lesquels les pièces de renvoi 46 sont montées pivotantes sur le fût 26.

Afin d'éviter un fonctionnement intempestif des moyens de protection 22, provoqué par exemple par un mauvais état de la piste d'atterrissage, un organe frangible est interposé entre chacun des mécanismes 42 et la structure du train d'atterrissage 16. Dans le mode de réalisation représenté, cet organe frangible est constitué par une goupille de sécurité 60 qui traverse à la fois la pièce de renvoi 46 et une oreille 61 (figure 3) solidaire du fût 26.

Comme l'illustre en particulier la figure 3, la structure du fuselage 10 située entre le train d'atterrissage 16 et le réservoir 20 (figure 1) comprend une partie renforcée 62, contre laquelle peut venir en appui la pièce 40 de commande de déconnexion, comme on l'a représenté en traits discontinus, dans le cas d'un atterrissage anormal de l'avion. Cette partie renforcée 62 permet d'éviter tout risque de perforation du réservoir de carburant 20, avant que le train d'atterrissage 16 ne soit déconnecté de la structure du fuselage 10.

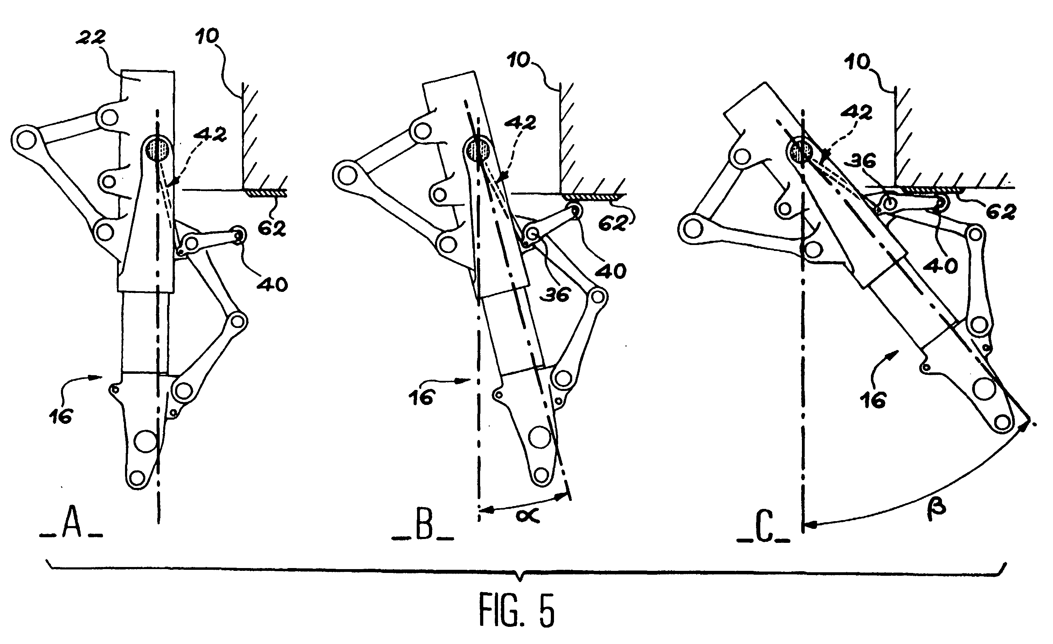

On décrira à présent, en se référant notamment aux parties A, B et C de la figure 5, un exemple de mise en oeuvre des moyens de protection 22 qui viennent d'être décrits.

Lorsque l'atterrissage de l'avion est normal, le train d'atterrissage 16 se présente dans l'état illustré en A. Dans ces conditions, le fût 26 reste sensiblement vertical et la pièce 40 reste éloignée de la partie renforcée 62 de la structure du fuselage 10. Il ne se produit donc aucun déplacement de la pièce 40, de sorte que les mécanismes 42 qui relient cette pièce à chacune des broches 38 ne sont pas actionnés. Les broches 38 restent donc en prise dans leur logement et assurent la transmission à la structure du fuselage des efforts exercés par le train d'atterrissage, de façon classique.

Lorsque l'atterrissage s'effectue de manière anormale, le train d'atterrissage 16 peut pivoter vers l'arrière autour de l'axe des broches 38, par exemple en raison de la présence d'un obstacle sur la piste ou suite à la cassure de certaines pièces structurales. Le galet 41 monté à l'extrémité de la pièce 40 vient alors en appui contre la partie renforcée 62 de la structure du fuselage 10, après un pivotement d'un angle a du train d'atterrissage 16, comme on l'a illustré en B sur la figure 5.

Si le pivotement vers l'arrière du train d'atterrissage 16 autour de l'axe des broches 38 se poursuit au-delà de cet angle a, la pièce 40 pivote autour de l'axe 36, dans le sens des aiguilles d'une montre en considérant la figure 5. Sous l'effet de ce pivotement, chacune des broches 38 est déplacée selon son axe vers le fût 26, de façon à être dégagé progressivement du logement dans lequel elle est normalement reçue dans la structure du fuselage. Ainsi, lorsque le pivotement vers l'arrière du train d'atterrissage 16 atteint un angle β, comme illustré en C sur la figure 5, les broches 38 sont totalement dégagées de leurs logements et le train 16 est alors déconnecté au moins en partie de la structure du fuselage. L'angle β est sensiblement supérieur à l'angle α, comme l'illustre la figure 5.

On évite ainsi l'application, sur la structure du fuselage 10 attenante au réservoir de carburant 20, d'un effort susceptible d'entraîner la perforation de la paroi inférieure de ce réservoir et la venue en contact des parties chaudes du train avec le carburant. Tout risque de destruction complète de l'avion due à une explosion du carburant ayant pour origine sa venue en contact avec le train d'atterrissage est ainsi évité.

La présence de la goupille de sécurité 60 permet d'éviter qu'une déconnexion n'intervienne trop rapidement lorsque le train d'atterrissage pivote vers l'arrière lors d'un atterrissage sur une piste en mauvais état, alors qu'il n'existe aucun risque de perforation du réservoir de carburant 20.

Le mode de réalisation qui vient d'être décrit à titre d'exemple peut subir différentes modifications, sans sortir du cadre de l'invention. Ainsi, par exemple, au lieu d'agir simultanément sur les deux broches 38, les moyens de protection 22 peuvent être conçus de façon à ne commander que l'escamotage de l'une des broches, dans des conditions d'atterrissage accidentel. Lorsque les moyens de protection entrent en action, le bas du train d'atterrissage est alors plus fortement déséquilibré d'un côté, de sorte qu'il s'écarte plus rapidement de la trajectoire de l'avion.

Par ailleurs, les moyens de protection en eux-mêmes peuvent être réalisés différemment. La pièce pivotante 40 peut notamment être remplacée par une pièce coulissante. Le ou les mécanismes reliant cette pièce à la ou aux broches 38 peuvent alors prendre une forme appropriée quelconque. De façon plus générale, la commande mécanique de déconnexion peut être remplacée par une commande d'une autre nature, par exemple hydraulique ou électrique, déclenchée par l'actionnement d'un contact, lors de la venue de celui-ci en appui contre la partie renforcée de la structure du fuselage.

Par ailleurs, l'agencement protégé peut également être utilisé dans le cas d'un train d'atterrissage disposé devant un réservoir de carburant en tout autre emplacement d'un avion, et notamment sous la voilure.

## Revendications

1. Train d'atterrissage (16) d'avion, apte à être relié à une structure (10) de l'avion par des moyens de montage localisés (38), dans lequel il est prévu, sur ledit train d'atterrissage (16), des moyens de protection (22) d'un réservoir de carburant (20), pour déconnecter automatiquement, au moins en partie, les moyens de montage localisés (38), lors d'un basculement accidentel du train d'atterrissage (16) vers l'arrière, **caractérisé en ce que** le réservoir de carburant (20) est apte à être placé derrière le train d'atterrissage (16) et les moyens de protection (22) comprennent au moins une pièce (40) de commande de déconnexion, montée de façon mobile sur une structure (26) du train d'atterrissage (16) et apte à venir engager une partie (62) de la structure de l'avion, située entre le réservoir de carburant (20) et le train d'atterrissage (16), lors d'un basculement accidentel de celui-ci vers l'arrière d'un angle minimal prédéterminé, inférieur à un angle maximal prédéterminé.

2. Train d'atterrissage selon la revendication 1, dans lequel les moyens de montage localisés comprenant au moins une broche (38) liée à la structure (26) du train d'atterrissage (16), et apte à être normalement reçue dans un logement lié à la structure (10) de l'avion, les moyens de protection comprennent de plus au moins un mécanisme (42) apte à déplacer la broche (38) parallèlement à elle-même, pour la dégager progressivement dudit logement, en réponse à un déplacement de la pièce (40) de commande de déconnexion par rapport à la structure (26) du train d'atterrissage (16), consécutif à un pivotement de celui-ci entre ledit angle minimal prédéterminé et ledit angle maximal prédéterminé.

3. Train d'atterrissage selon la revendication 2, dans lequel ledit mécanisme (42) inclut un organe frangible (60) immobilisant normalement la broche (38) par rapport à la structure (26) du train d'atterrissage, lorsque l'effort exercé sur ledit organe frangible reste inférieur à un seuil prédéterminé.

4. Train d'atterrissage la revendication 3, dans lequel, les moyens de montage localisés comprenant deux broches alignées (38) liées à la structure (26) du train d'atterrissage (16), et aptes à être normalement reçues dans deux logements alignés liés à la structure (10) de l'avion, les moyens de protection comprennent deux mécanismes (42) aptes à déplacer simultanément chacune des broches (38) parallèlement à elle-même.

5. Train d'atterrissage selon l'une quelconque. des revendications 1 à 4, dans lequel la pièce (40) de commande de déconnexion est montée pivotante sur la structure (26) du train d'atterrissage (16).

6. Train d'atterrissage selon la revendication 5, combinée avec l'une quelconque des revendications 2 à 4, dans lequel la pièce (40) de commande de déconnexion est montée pivotante autour d'un axe (36) parallèle à l'axe de ladite broche (38).

7. Train d'atterrissage selon la revendication 6, dans lequel ledit mécanisme (42) comprend un premier levier (44) reliant la pièce (40) de commande de déconnexion à une pièce de renvoi (46) montée pivotante sur la structure (26) du train d'atterrissage (16), et un deuxième levier (48) reliant la pièce de renvoi à ladite broche (38).

8. Avion, comprenant au moins un train d'atterrissage (16) selon la revendication 1, relié à une structure (10) de l'avion par des moyens de montage localisés (38), et au moins un réservoir de carburant (20), dans lequel le réservoir de carburant (20) est placé derrière le train d'atterrissage (16) et dans lequel des moyens de protection (22) dudit réservoir sont prévus, sur le train d'atterrissage (16), pour déconnecter automatiquement, au moins en partie, les moyens de montage localisés (38), lors d'un basculement accidentel du train d'atterrissage (16) vers l'arrière, au-delà d'un angle maximal prédéterminé.

9. Avion selon la revendication 8, dans lequel les moyens de protection (22) comprennent au moins une pièce (40) de commande de déconnexion, montée de façon mobile sur une structure (26) du train d'atterrissage (16) et apte à venir engager une partie (62) de la structure de l'avion, située entre le réservoir de carburant (20) et le train d'atterrissage (16), lors d'un basculement accidentel de celui-ci vers l'arrière d'un angle minimal prédéterminé, inférieur audit angle maximal prédéterminé.

10. Avion selon la revendication 9, dans lequel ladite partie (62) de la structure de l'avion est renforcée.

11. Avion selon l'une quelconque des revendications 9 et 10, dans lequel les moyens de montage localisés comprenant au moins une broche (38) liée à la structure (26) du train d'atterrissage (16), et apte à être normalement reçue dans un logement lié à la structure (10) de l'avion, les moyens de protection comprennent de plus au moins un mécanisme (42) apte à déplacer la broche (38) parallèlement à elle-même, pour la dégager progressivement dudit logement, en réponse à un déplacement de la pièce (40) de commande de déconnexion par rapport à la structure (26) du train d'atterrissage (16), consécutif à un pivotement de celui-ci entre ledit angle minimal prédéterminé et ledit angle maximal prédéterminé.

12. Avion selon l'une quelconque des revendications 8 à 11, dans lequel le réservoir de carburant (20) est placé dans la partie basse du fuselage (10) et le train d'atterrissage (16) constitue le train d'atterrissage principal de l'avion.

## Claims

1. Aircraft landing gear (16) which can be connected to a structure (10) of the aircraft by localized assembly means (38), in which on said landing gear (16) are provided means (22) for protecting a fuel tank (20), in order to at least partly automatically disconnect the localized assembly means (38) during an accidental backward tilting of the landing gear (16), **characterized in that** the fuel tank (20) can be placed behind the landing gear (16) and the protection means (22) comprise at least one disconnection control part (40) mounted in mobile manner on a structure (26) of the landing gear (16) and which can engage part (62) of the aircraft structure located between the fuel tank (20) and the landing gear (16) during an accidental backward tilting thereof by a minimum predetermined angle smaller than a maximum predetermined angle.

2. Landing gear according to claim 1, in which the localized assembly means include at least one pin (38) connected to the structure (26) of landing gear (16), that normally fits into a housing connected to the aircraft structure (10), the protection means also comprising at least one mechanism (42) capable of displacing the above mentioned pin (38) parallel to itself to gradually release it from its housing, in response to a displacement of the disconnection control part (40) with respect to the structure (26) of the landing gear (16), after the landing gear has rotated through an angle between the said predetermined minimum angle and the said predetermined maximum angle.

3. Landing gear according to claim 2, in which the said mechanism (42) includes a frangible device (60) that normally fixes the pin (38) with respect to the structure (26) of the landing gear when the force exerted on this frangible device remains below a predetermined threshold.

4. Landing gear according to claim 3, in which the localized assembly means comprise two pins (38) in line connected to the structure (26) of the landing gear (16) that normally fit into two housings in line with each other connected to the aircraft structure (10), the protection means comprising one or two mechanisms (42) capable of moving one or both of the two pins (38) simultaneously, parallel to itself.

5. Landing gear according to any one of the claims 1 to 4, in which the disconnection control part (40) is free to pivot on the structure (26) of the landing gear (16).

6. Landing gear according to claim 5, combined with any one of the claims 2 to 4 in which the disconnection control part (40) is free to pivot about an axis (36) parallel to the axis of the said pin (38).

7. Landing gear according to claim 6, in which the said mechanism (42) comprises a first lever (44) connecting the disconnection control part (40) to a linkage part (46) installed free to pivot on the structure (26) of the landing gear (16), and a second lever (48) connecting the linkage part to the said pin (38).

8. Aircraft comprising at least one landing gear (16) connected to an aircraft structure (10) by localized assembly means (38), and at least one fuel tank (20), in which the fuel tank (20) is located behind the landing gear (16) and means (22) of protecting the said tank are provided on the landing gear (16) to automatically at least partly disconnect the localized assembly means (38) when the landing gear (16) is accidentally tilted backwards beyond a predetermined maximum angle.

9. Aircraft according to claim 8, in which the protection means (22) comprise at least one disconnection control part (40) installed on part of the structure (26) of the landing gear (16) such that it is free to move and can engage on part (62) of the aircraft structure located between the fuel tank (20) and the landing gear (16), when the landing gear accidentally tilts backward by a predetermined minimum angle less than the predetermined maximum angle.

10. Aircraft according to claim 9, in which the said part (62) of the aircraft structure is reinforced.

11. Aircraft according to either of the claims 9 and 10, in which the localized assembly means include at least one pin (38) connected to the structure (26) of landing gear (16), that normally fits into a housing connected to the aircraft structure (10), the protection means also comprising at least one mechanism (42) capable of displacing the above mentioned pin (38) parallel to itself to gradually release it from its housing, in response to a displacement of the disconnection control part (40) with respect to the structure (26) of the landing gear (16), after the landing gear has rotated through an angle between the said predetermined minimum angle and the said predetermined maximum angle.

12. Aircraft according to any one of the claims 8 to 11, in which the fuel tank (20) is located in the lower part of the fuselage (10) and the landing gear (16) forms the main landing gear of the aircraft.

## Patentansprüche

1. Fahrwerk (16) eines Flugzeugs, das mit einer Struktur (10) des Flugzeugs über lokalisierte Montagemittel (38) verbunden werden kann, wobei am Fahrwerk (16) Schutzmittel (22) eines Treibstoffbehälters (20) vorgesehen sind, um zumindest teilweise die lokalisierten Montagemittel (38) bei einem unvorhergesehen bzw. zufälligen Kippen des Fahrwerks (16) nach hinten automatisch loszulösen, **dadurch gekennzeichnet, dass** der Treibstoffbehälter (20) hinter dem Fahrwerk (16) angeordnet werden kann und die Schutzmittel (22) mindestens ein Teil (40) zur Steuerung der Verbindungstrennung aufweisen, das beweglich an einer Struktur (26) des Fahrwerks (16) angebracht ist und mit einem Abschnitt (62) der Flugzeugstruktur, der zwischen dem Treibstoffbehälter (20) und dem Fahrwerk (16) gelegen ist, bei einem unvorhergesehenen bzw. zufälligen Kippen desselben nach hinten um einen vorbestimmten Minimalwinkel, der kleiner als ein vorbestimmter Maximalwinkel ist, in Eingriff kommen kann.

2. Fahrwerk nach Anspruch 1, wobei die lokalisierten Montagemittel mindestens einen mit der Struktur (26) des Fahrwerks (16) verbundenen Zapfen (38), der normalerweise in einem Sitz aufgenommen werden kann, der mit der Struktur (10) des Flugzeugs verbunden ist, umfassen, wobei die Schutzmittel außerdem mindestens einen Mechanismus (42) umfassen, der den Zapfen (38) parallel zu sich selbst verschieben kann, um ihn in Reaktion auf eine Verschiebung des Teils (40) zur Steuerung der Verbindungstrennung bezüglich der Struktur (26) des Fahrwerks (16) in der Folge einer Kippbewegung desselben zwischen dem vorbestimmten Minimalwinkel und dem vorbestimmten Maximalwinkel nach und nach aus dem Sitz zu lösen.

3. Fahrwerk nach Anspruch 2, wobei der Mechanismus (42) ein zerbrechliches Organ (60) aufweist, das normalerweise den Zapfen (38) in Bezug auf die Struktur (26) des Fahrwerks feststellt, wenn die auf das zerbrechliche Organ ausgeübte Kraft unter einer vorbestimmten Schwelle bleibt.

4. Fahrwerk nach Anspruch 3, wobei die lokalisierten Montagemittel zwei ausgerichtete Zapfen (38), die mit der Struktur (26) des Fahrwerks (16) verbunden sind und normalerweise in zwei mit der Struktur (10) des Flugzeugs verbundenen Sitzen aufgenommen werden können, umfassen, wobei die Schutzmittel zwei Mechanismen (42), welche gleichzeitig jeden der Zapfen (38) parallel zu sich selbst verschieben können,. umfassen.

5. Fahrwerk nach einem der Ansprüche 1 bis 4, wobei das Teil (40) zur Steuerung der Verbindungstrennung dreh-/schwenkbar an der Struktur (26) des Fahrwerks (16) angebracht ist.

6. Fahrwerk nach Anspruch 5 in Kombination mit einem der Ansprüche 2 bis 4, wobei das Teil (40) zur Steuerung der Verbindungstrennung dreh-/schwenkbar um eine zur Achse des Zapfens (38) parallele Achse (36) angebracht ist.

7. Fahrwerk nach Anspruch 6, wobei der Mechanismus (42) einen ersten Riegel (44), der das Teil (40) zur Steuerung der Verbindungstrennung mit einem Rückführteil (46) verbindet, welches dreh-/schwenkbar an der Struktur (26) des Fahrwerks (16) angebracht ist, und einen zweiten Hebel (48), der das Rückführteil mit dem Zapfen (38) verbindet, umfasst.

8. Flugzeug mit mindestens einem Fahrwerk (16) nach Anspruch 1, das mit einer Struktur (10) des Flugzeugs über lokalisierte Montagemittel (38) verbunden ist, und mit mindestens einem Treibstoffbehälter (20), wobei der Treibstoffbehälter (20) hinter dem Fahrwerk (16) angeordnet ist, und wobei Schutzmittel (22) des Behälters am Fahrwerk (16) zum automatischen, mindestens teilweisen Loslösen bzw. Trennen der Verbindung der lokalisierten Montagemittel (38) bei einem unvorhergesehenen bzw. zufälligen Kippen des Fahrwerks (16) nach hinten über einen vorbestimmten Maximalwinkel hinaus vorgesehen sind.

9. Flugzeug nach Anspruch 8, wobei die Schutzmittel (22) mindestens ein Teil (40) zum Steuern des Loslösens bzw. der Verbindungstrennung umfassen, das beweglich an einer Struktur (26) des Fahrwerks (16) angebracht ist, und das mit einem Abschnitt (62) der Struktur des Flugzeugs, die zwischen dem Treibstoffbehälter (20) und dem Fahrwerk (16) gelegen ist, bei einem zufälligen Kippen desselben nach hinten um einen vorbestimmten Minimalwinkel, der kleiner ist der vorbestimmte Maximalwinkel, in Eingriff kommen kann.

10. Flugzeug nach Anspruch 9, wobei der Abschnitt (62) der Struktur des Flugzeugs verstärkt ist.

11. Flugzeug nach einem der Ansprüche 9 oder 10, wobei die lokalisierten Montagemittel mindestens einen mit der Struktur (26) des Fahrwerks (16) verbundenen und normalerweise in einem mit der Struktur (10) des Flugzeugs verbundenen Sitz aufnehmbaren Zapfen (38) umfassen, und die Schutzmittel außerdem mindestens einen Mechanismus (42) umfassen, der den Zapfen (38) parallel zu sich selbst verschieben kann, um ihn in Reaktion auf eine Verschiebung des Teils (40) zur Steuerung der Verbindungstrennung bzw. des Loslösens in Bezug auf die Struktur (26) des Fahrwerks (16) in der Folge eines Kippens desselben zwischen dem vorbestimmten Minimalwinkel und dem vorbestimmten Maximalwinkel nach und nach aus dem Sitz zu lösen.

12. Flugzeug nach einem der Ansprüche 8 bis 11, wobei der Treibstoffbehälter (20) in dem unteren Abschnitt des Rumpfes (10) angeordnet ist und das Fahrwerk (16) das Hauptfahrwerk des Flugzeugs bildet.
